# EUROPÄISCHE PATENTANMELDUNG

(11) **EP 4 762 907 A1**
(43) Veröffentlichungstag der Anmeldung: **24.06.2026**
(21) Anmeldenummer: 24220548.2
(22) Anmeldetag: 17.12.2024
(51) Int. Cl.: A01D 34/73, A01D 75/18

(54) **MESSERHALTER UND RASENMÄHER**

(71) Anmelder: Andreas Stihl AG & Co. KG, 71336 Waiblingen (DE)
(72) Erfinder: Schimmele, Stefan, 6330 Kufstein (AT); Kainzner, Christof, 6284 Ramsau im Zillertal (AT)
(74) Vertreter: Patentanwälte Ruff, Wilhelm, Beier, Dauster & Partner mbB

(57) **Zusammenfassung**

2.1. Die Erfindung bezieht sich auf einen Messerhalter zum Halten eines im Betrieb mit dem Messerhalter um eine Drehachse (D) rotierenden Schneidmessers und auf einen damit ausgerüsteten Rasenmäher. Der Messerhalter weist eine Halterstirnseite (1) auf, die eine Anlagefläche (2) zum Anlegen des Schneidmessers, einen gegenüber der Drehachse versetzten Pinbereich (3) mit einem gegenüber der Anlagefläche vertieften Aufnahmeboden (4) und einen Koppelpin (5) im Pinbereich aufweist, wobei sich der Koppelpin vom Aufnahmeboden aus über die Anlagefläche hinaus vorstehend erstreckt und zum drehkoppelnden Zusammenwirken mit dem Schneidmesser eingerichtet ist. Zudem beinhaltet der Messerhalter eine Befestigungseinrichtung (6) zum drehgekoppelten Befestigen des Schneidmessers in seiner Anlage gegen die Anlagefläche.

2.2. Erfindungsgemäß weist die Halterstirnseite eine Auswurfschrägfläche (7) auf, die sich zumindest auf einer drehrichtungsabgewandten Seite (8) des Koppelpins (5) schräg vom Aufnahmeboden (4) zur Anlagefläche (2) erstreckt.

2.3. Verwendung in der Rasenmähertechnik.

## Beschreibung

Die Erfindung bezieht sich auf einen Messerhalter zum Halten eines im Betrieb mit dem Messerhalter um eine Drehachse rotierenden Schneidmessers eines Rasenmähers nach dem Oberbegriff des Anspruchs 1 und auf einen mit einem solchen Messerhalter ausgerüsteten Rasenmäher.

Solche gattungsgemäßen Messerhalter beinhalten somit eine Halterstirnseite mit einer Anlagefläche zum Anlegen des Schneidmessers und eine Befestigungseinrichtung zum drehgekoppelten Befestigen des Schneidmessers in seiner Anlage gegen die Anlagefläche. Die Halterstirnseite weist einen gegenüber der Drehachse versetzten Pinbereich mit einem gegenüber der Anlagefläche vertieften Aufnahmeboden und einen Koppelpin im Pinbereich auf, wobei sich der Koppelpin vom Aufnahmeboden aus über die Anlagefläche hinaus vorstehend erstreckt und zum drehkoppelnden Zusammenwirken mit dem Schneidmesser eingerichtet ist.

Messerhalter dieser und ähnlicher Art werden zum Halten des Schneidmessers am Rasenmäher verwendet, wie an einem handgeführten Rasenmäher oder einem Roboter-Rasenmäher. Die Befestigungseinrichtung sorgt zusammen mit dem Koppelpin für die drehgekoppelte Verbindung des Schneidmessers mit dem Messerhalter, wobei vorzugsweise mehrere Pinbereiche und entsprechend mehrere Koppelpins vorgesehen sind. Antriebsseitig kann der Messerhalter an einen Schneidantrieb, wie einen Elektromotor oder Verbrennungsmotor, angekoppelt werden, abtriebsseitig hält er an seiner Halterstirnseite das Schneidmesser. Aufgrund seines meist rohr- bzw. hülsenförmigen Aufbaus wird der Messerhalter in diesen Anwendungen oftmals auch als Messerbuchse bezeichnet. Meist bildet dabei die Längsmittenachse des rohr- /hülsenförmigen Messerhalters die Drehachse, um die sich der Messerhalter und das Schneidmesser im Betrieb drehen, wobei die Drehung im Betrieb stets in einer gleichen Drehrichtung erfolgt, in der das entsprechend gestaltete Schneidmesser seine gewünschte Schneidwirkung ausübt.

Durch das vertiefte Anordnen des Koppelpins wird eine sichere, insbesondere ganzflächige, Anlage des Schneidmessers gegen die Anlagefläche des Messerhalters begünstigt, die nicht durch etwaige Unebenheiten im Anbindungsbereich des Koppelpins mit seinem Fußende an der Halterstirnseite, d.h. am Aufnahmeboden, beeinträchtigt wird. Im Fall, dass zum drehkoppelnden Zusammenwirken von Messerhalter und Schneidmesser der Koppelpin formschlüssig durch eine Pindurchführungsöffnung des Schneidmessers durchgreift, braucht dann die Weite der Pindurchführungsöffnung am Schneidmesser kaum größer sein als der Durchmesser des Koppelpins. Für eine möglichst spielfreie Drehkopplung des Schneidmessers am Messerhalter ist ein enges Durchführen des Koppelpins durch die Pindurchführungsöffnung am Schneidmesser wünschenswert. Der Koppelpin kann beispielsweise eine zylindrische, insbesondere hohlzylindrische, Form mit kreisförmigem Querschnitt besitzen, alternativ auch mit einem ovalen oder polygonalen Querschnitt oder dergleichen.

Ein herkömmlicher gattungsgemäßer Messerhalter wird von der Anmelderin in von ihr vertriebenen Rasenmähern eingesetzt. Dieser Messerhalter besitzt als Befestigungseinrichtung eine zur Drehachse zentrische Verschraubung des Schneidmessers an der Halterstirnseite. Außermittig weist der Messerhalter zwei sich bezüglich der zentrischen Drehachse diametral gegenüberliegende Pinbereiche mit jeweiligem Koppelpin auf, wobei die Koppelpins formschlüssig mit am Schneidmesser passend ausgebildeten Pindurchführungsöffnungen drehkoppelnd zusammenwirken.

Bei Rasenmähern und ähnlichen Anwendungen kann im Betrieb der Fall auftreten, dass das rotierende Schneidmesser aufgrund eines festen Hindernisses schlagartig zum Stillstand kommt. Dadurch entsteht die Gefahr, dass es zu merklichen Schädigungen des Messerhalters und angrenzender bzw. daran angekoppelter Bauteile kommt, wie ein angekoppelter Antriebsmotor bzw. dessen Motorwelle. Es entsprechender Schutz ist daher gewünscht und oft sogar per Normung gefordert. Dazu sollte der Messerhalter eine sogenannte Schlagprüfung bestehen, die beinhaltet, dass nur die Koppelpins abgeschert werden, ohne dass Strukturbauteile des Messerhalters und angrenzender bzw. damit gekoppelter Bauteile des Rasenmähers beschädigt werden bzw. Risse bekommen, wenn im laufenden Betrieb die Rotation des Schneidmessers durch ein Hindernis blockiert wird und das Schneidmesser dadurch schlagartig zum Stillstand gebracht wird.

Beim erwähnten herkömmlichen gattungsgemäßen Messerhalter der Anmelderin sind zu diesem Zweck die Koppelpins dafür ausgelegt, sich im Fall der Schneidmesserblockade durch den sich noch weiterdrehenden Messerhalter von diesem abzulösen bzw. abzuscheren und dadurch kinetische Energie zu absorbieren und über das Abscheren der Koppelpins hinausgehende, größere Schädigungen des Messerhalters an seiner Halterstirnseite und in seinem weiteren Bereich bis zur Ankopplung an den Antriebsmotor und auch Schädigungen von mit dem Messerhalter gekoppelten Bauteilen zu vermeiden, wie von Teilen des Antriebsmotors.

Weitere herkömmliche Messerhalter für Schneidmesser von Rasenmähern, bei denen Maßnahmen zum Schutz des Messerhalters bei plötzlicher Schneidmesserblockade getroffen sind, sind in der Offenlegungsschrift US 2005/0229573 A1 und den Patentschriften US 4.771.593 und US 3.050.925 offenbart.

Der Erfindung liegt als technisches Problem die Bereitstellung eines Messerhalters der eingangs genannten Art, der insbesondere hinsichtlich Schutz vor Schädigungen durch Schneidmesserblockaden gegenüber dem erwähnten Stand der Technik weiter verbessert ist, sowie eines mit einem solchem Messerhalter ausgerüsteten Rasenmähers zugrunde.

Die Erfindung löst dieses Problem durch die Bereitstellung eines Messerhalters mit den Merkmalen des Anspruchs 1 und eines Rasenmähers mit den Merkmalen des Anspruchs 10. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Erfindungsgemäß weist die Halterstirnseite eine Auswurfschrägfläche auf, die sich zumindest auf einer drehrichtungsabgewandten Seite des Koppelpins schräg vom Aufnahmeboden zur Anlagefläche erstreckt. Unter der drehrichtungsabgewandten Seite des Koppelpins ist dabei die in der Drehrichtung des Schneidmessers im Betrieb hintere Seite des Koppelpins zu verstehen. Aufgrund dieser Form und Lage kann die Auswurfschrägfläche im Fall einer Schneidmesserblockade das Ablösen bzw. Abscheren des Koppelpins von der Halterstirnfläche und insbesondere das Entfernen des abgelösten Koppelpins aus dem Pinbereich unterstützen und begünstigen. Von besonderem Vorteil ist, dass der abgelöste bzw. abgescherte Koppelpin durch die Auswurfschrägfläche aus dem Pinbereich mit dem vertieften Aufnahmeboden ausgeworfen werden kann, indem er bei stehendem Schneidmesser und sich noch weiterdrehendem Messerhalter an dieser Schrägfläche entlanggleiten und dadurch mit seinem Fußende vom vertieften Aufnahmeboden zur erhöhten Anlagefläche gelangen und auf diese Weise aus dem vertieften Pinbereich ausgeworfen werden kann, ohne dass die Gefahr besteht, dass er sich zwischen einer Seitenwand des vertieften Pinbereichs oder einem anderen Teil der Halterstirnseite und dem Schneidmesser verklemmt. Die Auswurfschrägfläche fungiert mit anderen Worten als eine Art Auswurframpe, mit deren Hilfe der Koppelpin nach dem Ablösen bzw. Abscheren vom Aufnahmeboden aus dem vertieften Pinbereich des Messerhalters ausgeworfen werden kann. Somit entfällt die Gefahr, dass der Koppelpin im vertieften Pinbereich verbleibt und sich dort zwischen dem Messerhalter und dem Schneidmesser verklemmt und es dadurch zu einer signifikanten Schädigung des Messerhalters kommt. Die Schrägerstreckung der Auswurfschrägfläche vom Aufnahmeboden zur Anlagefläche ist vorzugsweise im Wesentlichen tangential zur Drehbewegung des Schneidmessers orientiert, was zu einem optimalen Entfernen des abgelösten Koppelpins beitragen kann.

In einer Weiterbildung der Erfindung umfasst der Pinbereich einen ersten Pinbereich mit einem gegenüber der Anlagefläche vertieften ersten Aufnahmeboden und einen zweiten Pinbereich mit einem gegenüber der Anlagefläche vertieften zweiten Aufnahmeboden. Die Halterstirnseite weist einen ersten Koppelpin im ersten Pinbereich und einen zweiten Koppelpin im zweiten Pinbereich auf, wobei sich der erste und der zweite Koppelpin vom jeweiligen Aufnahmeboden aus über die Anlagefläche hinaus vorstehend erstrecken und zum drehkoppelnden Zusammenwirken mit dem Schneidmesser eingerichtet sind. Diese Drehkopplung von Schneidmesser und Messerhalter über mindestens zwei Koppelpins bietet Vorteile, wie sie dem Fachmann von entsprechenden herkömmlichen Anordnungen geläufig sind. Alternativ ist es grundsätzlich auch möglich, zusätzlich zur Befestigungseinrichtung, die wie an sich bekannt vorzugsweise aus einer zentrischen Verschraubung bestehen kann, nur einen einzigen außermittigen Pinbereich mit Koppelpin am Messerhalter vorzusehen.

In einer Ausgestaltung der Erfindung liegen sich der erste und der zweite Pinbereich einander bezüglich der Drehachse diametral gegenüber. Diese Anordnung der beiden Pinbereiche bietet funktionelle Vorteile insbesondere im Hinblick auf das Kraftübertragungsverhalten, wie dem Fachmann ebenfalls von entsprechenden herkömmlichen Anordnungen geläufig. Alternativ ist es für bestimmte Anwendungen auch möglich, die beiden Pinbereiche mit einem Umfangswinkelabstand ungleich 180° bzgl. der Drehachse anzuordnen.

In einer Weiterbildung der Erfindung ist der Koppelpin zum formschlüssigen Durchführen durch eine Pindurchführungsöffnung des Schneidmessers hindurch eingerichtet. Diese Realisierung des drehkoppelnden Zusammenwirkens von Messerhalter und Schneidmesser bietet ebenfalls funktionelle Vorteile, wie sie dem Fachmann von entsprechenden herkömmlichen Anordnungen grundsätzlich geläufig sind. Alternativ kann der Koppelpin in anderer Weise mit dem Schneidmesser zusammenwirken, z.B. durch seitliches Einführen in eine Schlitzöffnung bzw. in einen einseitig offenen Aufnahmebereich des Schneidmessers, z.B. einen U-förmigen Aufnahmebereich.

In einer Ausgestaltung der Erfindung weist der Koppelpin an einem Kopfende eine Einführschräge auf. Die Einführschräge erleichtert das Einführen des Koppelpins in die Pindurchführungsöffnung des Schneidmessers, was insgesamt die Montage des Schneidmessers am Halterstirnende des Messerhalters erleichtert. Dies gilt besonders für den Fall mehrerer Koppelpins und entsprechend mehrerer Pindurchführungsöffnungen. Alternativ kann auf eine solche Einführschräge am Koppelpin verzichtet werden, wenn dies für die betreffenden Anwendungen problemlos ist.

In einer Weiterbildung der Erfindung erstreckt sich die Auswurfschrägfläche zumindest teilweise mit einem Schrägwinkel zur Anlagefläche, der im Bereich zwischen 10° und 80° liegt. Es zeigt sich, dass sich die gewünschte Auswurffunktionalität der Auswurfschrägfläche für den Koppelpin besonders gut erfüllen lässt, wenn der Schrägwinkel der Auswurfschrägfläche in diesem Bereich liegt. Dabei muss der Schrägwinkel lokal nicht zwingend überall den gleichen Wert haben, sondern kann über die Ausdehnung der Auswurfschrägfläche hinweg nach Bedarf variieren. In alternativen Ausführungen liegt der Schrägwinkel zumindest an einem oder mehreren Stellen der Auswurfschrägfläche außerhalb dieses Winkelbereichs, wenn dies für spezifische Anwendungen Vorteile bietet.

In einer Weiterbildung der Erfindung ist eine radiale Weite der Auswurfschrägfläche mindestens so groß wie eine radiale Weite des Koppelpins. Diese Dimensionierung der Auswurfschrägfläche begünstigt ein sicheres Auswerfen des Koppelpins, indem der Koppelpin in dieser radialen Ausdehnung nicht breiter als die Auswurfschrägfläche ist und daher innerhalb der radialen Weite der Auswurfschrägfläche aus dem vertieften Pinbereich problemlos herausbewegt werden kann. Unter der Radialrichtung ist hierbei die radiale Richtung in Bezug auf die Drehbewegung von Messerhalter und Schneidmesser um die Drehachse zu verstehen.

In einer Weiterbildung der Erfindung erstreckt sich die Auswurfschrägfläche radial nach außen um eine Zusatzweite über den Koppelpin hinaus. Diese Maßnahme erweist sich ebenfalls im Hinblick auf ein sicheres Auswerfen des Koppelpins ohne Verklemmungsgefahr als vorteilhaft. Durch die Zusatzweite der Auswurfschrägfläche in radialer Richtung nach außen wird der Koppelpin auch dann zuverlässig und verklemmungsfrei ausgeworfen, wenn er sich nach dem Ablösen bzw. Abscheren bedingt durch die Zentrifugalkräfte noch etwas radial nach außen bewegt. Die Zusatzweite kann beispielsweise in der Größenordnung der halben radialen Ausdehnung des Koppelpins oder einem Bruchteil davon liegen. Alternativ kann die Auswurfschrägfläche ohne diese radiale Zusatzweite ausgebildet sein, wenn dies für entsprechende Anwendungen problemfrei ist.

In einer Weiterbildung der Erfindung erstreckt sich die Auswurfschrägfläche radial nach innen mindestens bis zu einem radial inneren Ende des Koppelpins. Auch diese Maßnahme begünstigt in der Regel ein zuverlässiges Auswerfen des Koppelpins. Insbesondere wird ein etwaiges Verklemmen am radial inneren Ende des Koppelpins von vornherein ausgeschlossen, indem sich die Auswurfschrägfläche entsprechend weit radial nach innen erstreckt. Alternativ kann es für bestimmte Anwendungen ausreichen, wenn sich die Auswurfschrägfläche radial nach innen nicht ganz bis zum radial inneren Ende des Koppelpins erstreckt. Denn durch die Zentrifugalkraftwirkung wird der Koppelpin beim und nach dem Ablösen bzw. Abscheren tendenziell mit einer radial nach außen gerichteten Komponente wegbewegt bzw. ausgeworfen.

Der erfindungsgemäße Rasenmäher ist mit dem erfindungsgemäßen Messerhalter bestückt und umfasst auch ein an ihm drehgekoppelt befestigbares Schneidmesser. Durch die Verwendung des Messerhalters ergeben sich für den Rasenmäher die oben zum Messerhalter erwähnten vorteilhaften Wirkungen und Effekte.

Eine vorteilhafte Ausführungsformen der Erfindung ist in den Zeichnungen dargestellt. Diese und weitere Ausführungsformen der Erfindung werden nachfolgend näher erläutert. Dabei zeigen:
- Fig. 1: eine Perspektivansicht von unten auf einen Rasenmäher mit erfindungsgemäßem Messerhalter,
- Fig. 2: eine perspektivische Detailansicht von unten auf den Messerhalter mit daran befestigtem Schneidmesser,
- Fig. 3: die Ansicht von Fig. 2 bei abgenommenem Schneidmesser,
- Fig. 4: eine perspektivische Detailschnittansicht des Messerhalters mit Schneidmesser geschnitten im Bereich eines Koppelpins,
- Fig. 5: eine perspektive ausschnittweise Detailansicht auf eine Halterstirnseite des Messerhalters in der Umgebung eines Koppelpins,
- Fig. 6: eine Perspektivansicht auf die gesamte Halterstirnseite,
- Fig. 7: eine ausschnittweise Draufsicht auf die Halterstirnseite in der Umgebung eines Koppelpins und
- Fig. 8: die Ansicht von Fig. 4 in einem Schneidmesserblockade-Zustand mit abgeschertem, auszuwerfendem Koppelpin.

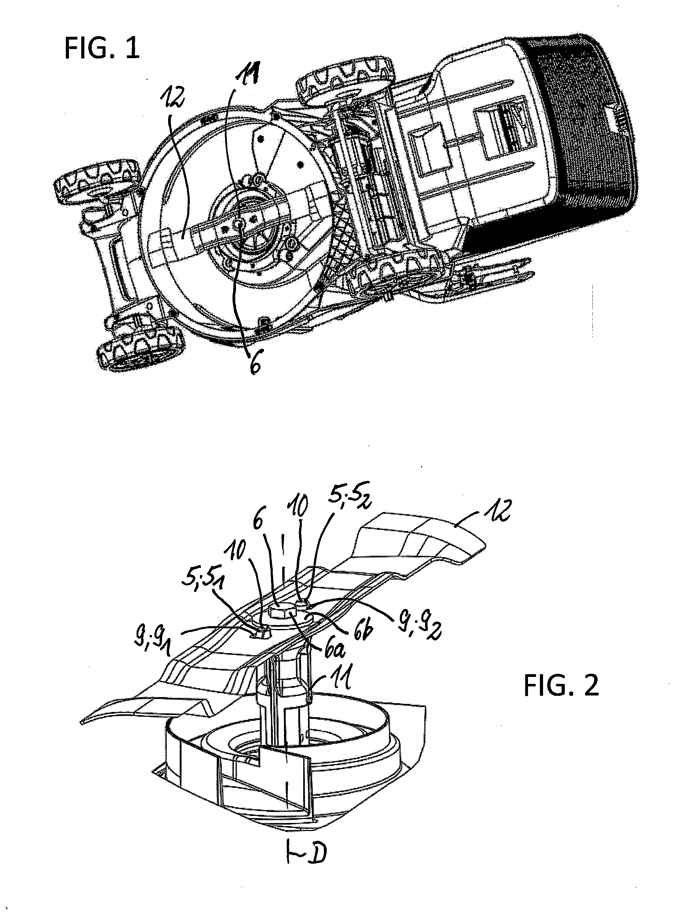

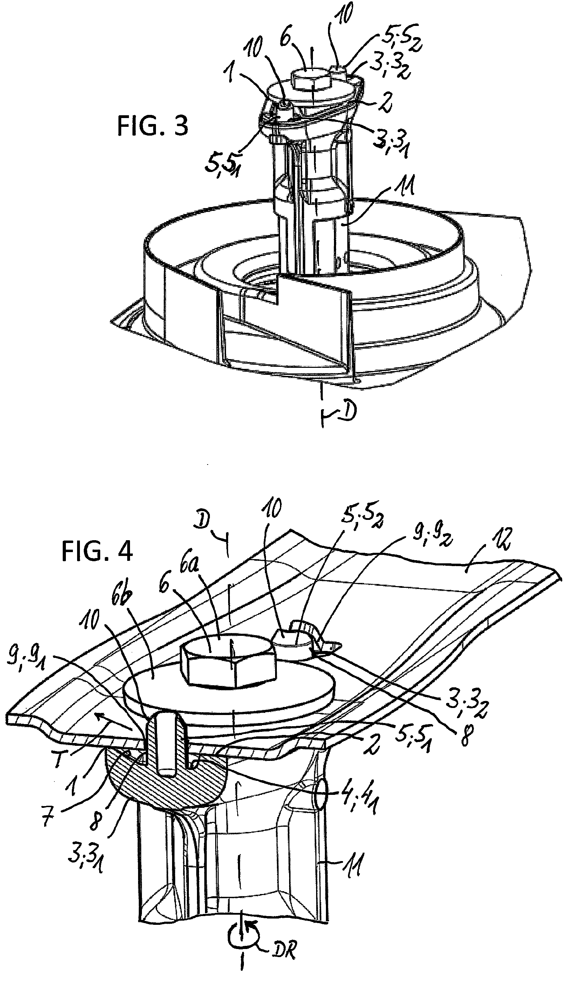

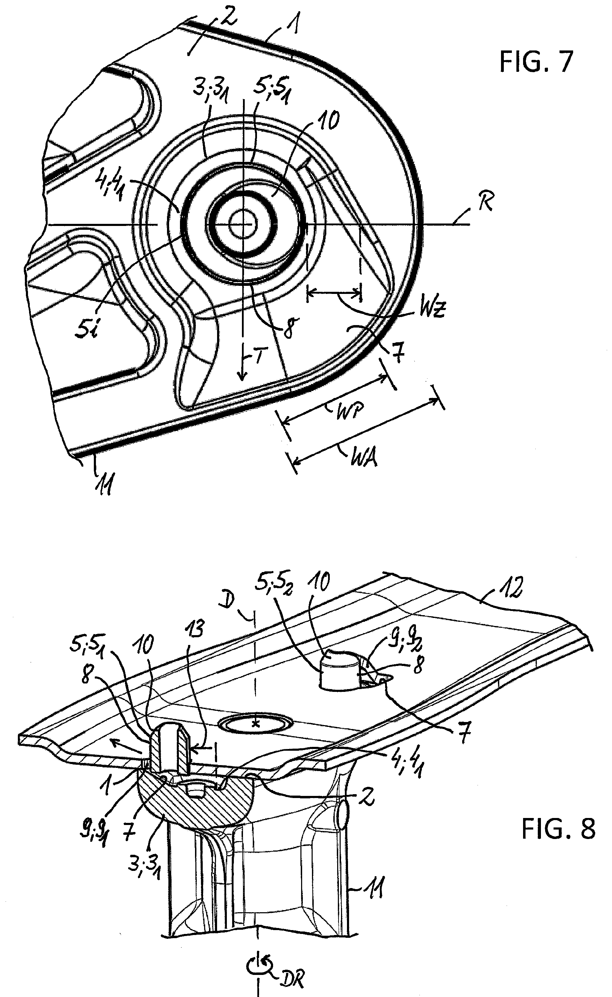

Wie in den Figuren anhand eines exemplarischen Ausführungsbeispiels veranschaulicht, beinhaltet der erfindungsgemäße Rasenmäher einen Messerhalter 11 und ein am Messerhalter 11 drehgekoppelt befestigbares Schneidmesser 12. Fig. 1 zeigt einen solchen Rasenmäher in Gesamtansicht perspektivisch von unten, so dass der Messerhalter 11 und das Schneidmesser 12 erkennbar sind. Die Fig. 2 und 8 zeigen Ausschnittansichten, um die vorliegend wesentlichen Rasenmäherkomponenten näher zu veranschaulichen, wobei die Fig. 3 und 5 bis 7 den Messerhalter 11 ohne das Schneidmesser 12 zeigen, so dass die vorliegend relevanten Teile und Bereiche des Messerhalters 11 besser erkennbar sind.

Der Messerhalter 11 dient zum Halten des im Betrieb mit dem Messerhalter 11 um eine Drehachse D rotierenden Schneidmessers 12 und ist ein erfindungsgemäßer Messerhalter, der dementsprechend eine speziell ausgeführte Halterstirnseite 1 aufweist. Diese Halterstirnseite 1 beinhaltet eine Anlagefläche 2 zum Anlegen des Schneidmessers 12, einen gegenüber der Drehachse D versetzten Pinbereich 3 und einen Koppelpin 5 im Pinbereich 3. Der Pinbereich 3, d.h. derjenige Bereich der Halterstirnseite 1, in dem sich der Koppelpin 5 befindet, besitzt einen gegenüber der Anlagefläche 2 vertieften Aufnahmeboden 4. Der Koppelpin 5 erstreckt sich vom Aufnahmeboden 4 aus über die Anlagefläche 2 hinaus vorstehend und ist zum drehkoppelnden Zusammenwirken mit dem Schneidmesser 12 eingerichtet.

Eine Befestigungseinrichtung 6 des Messerhalters 11 dient zum drehgekoppelten Befestigen des Schneidmessers 12 in seiner Anlage gegen die Anlagefläche 2. Im gezeigten Ausführungsbeispiel beinhaltet die Befestigungseinrichtung 6 in an sich bekannter Weise einen Schraubbolzen 6a, der stirnseitig in die Halterstirnseite 1 des Messerhalters 11 einschraubbar ist und über eine Anlagescheibe 6b das Schneidmesser 12 gegen die Anlagefläche 2 andrückt, wie z.B. aus den Fig. 2 und 4 ersichtlich. Vorzugsweise ist die Anlagefläche 4 an der Halterstirnseite 1 des Messerhalters 11 eben bzw. plan gestaltet, ebenso die gegen diese Anlagefläche 2 zur Anlage kommende Kontaktfläche des Schneidmessers 12, so dass sich eine flächige Anlage des Schneidmessers 12 gegen die Halterstirnseite 1 des Messerhalters 11 ergibt. Durch das vertiefte Anordnen des Koppelpins 5 wird eine über den gesamten Kontaktflächenbereich hinweg flächige Anlage des Schneidmessers 12 gegen die Anlagefläche 2 des Messerhalters 11 begünstigt, ohne durch etwaige Unebenheiten im Anbindungsbereich des Koppelpins 5 mit seinem Fußbereich an der Halterstirnseite 1, speziell am Aufnahmeboden 4, beeinträchtigt zu werden. Derartige Unebenheiten am Fußbereich des Koppelpins 5 können insbesondere fertigungsbedingt vorliegen.

Wie beispielsweise aus den Fig. 4 bis 6 und 8 zu erkennen, weist die Halterstirnseite 1 eine Auswurfschrägfläche 7 auf, die sich zumindest auf einer drehrichtungsabgewandten Seite 8 des Koppelpins 5 schräg vom Aufnahmeboden 4 zur Anlagefläche 2 erstreckt. Die drehrichtungsabgewandte Seite 8 des Koppelpins 5 ist hierbei diejenige Seite des Koppelpins 5, die, wenn sich das Schneidmesser 12 zusammen mit dem Messerhalter 11 im Betrieb des Rasenmähers in einer vorbestimmten Drehrichtung DR dreht, in Bezug auf diese Drehrichtung DR die hintere Seite des Koppelpins 5 bildet. Zum leichteren Verständnis ist die Drehrichtung DR in den Fig. 4, 6 und 8 explizit angegeben, beispielhaft als eine Drehung im Gegenuhrzeigersinn in den dortigen Ansichten schräg von unten auf den Messerhalter mit bzw. ohne Schneidmesser 12. In der Ansicht von Fig. 4 bewegen sich bei dieser Drehbewegung in der Drehrichtung DR der in Fig. 4 vordere, geschnitten gezeigte Koppelpin 5 samt dem zugehörigen Pinbereich 3 des Messerhalters 11 und dem angrenzenden Teil des Schneidmessers 12 im Wesentlichen von links nach rechts, weshalb dort die linke Seite des geschnitten gezeichneten Koppelpins 5 die drehrichtungsabgewandte Seite 8 des Koppelpins 5 ist.

Dementsprechend erstreckt sich auf dieser Seite 8 des Koppelpins 5 die Auswurfschrägfläche 7 schräg vom Aufnahmeboden 4 zur Anlagefläche 2 der Halterstirnseite 1. Die Schrägung verläuft hierbei im Wesentlichen in einer Tangentialrichtung T, wie sie in den Fig. 4 bis 8 angegeben ist, wobei diese Richtung tangential zur Drehbewegung des Messerhalters 11 und des Schneidmessers 12 um die Drehachse D und damit senkrecht zu einer Radialrichtung R verläuft. Unter der Radialrichtung R ist hierbei die radiale Richtung in Bezug auf die Drehbewegung von Messerhalter 11 und Schneidmesser 12 um die Drehachse D zu verstehen. Dabei erstreckt sich das Schneidmesser 12 mit zwei Messerarmen diametral von der Drehachse D abgehend in der Radialrichtung R nach außen. Vorzugsweise erstreckt sich die Auswurfschrägfläche 7 hierbei außer mit dieser Tangentialkomponente noch zusätzlich mit einer Richtungskomponente in der Radialrichtung R nach außen.

In vorteilhaften Ausführungsformen weist die Halterstirnseite 1, wie im gezeigten Beispiel, mehrere Pinbereiche 3 und zugehörige Koppelpins 5 auf, insbesondere einen ersten Pinbereich 3₁ mit einem gegenüber der Anlagefläche 2 vertieften ersten Aufnahmeboden 4₁ und einen zweiten Pinbereich 3₂ mit einem gegenüber der Anlagefläche 2 vertieften zweiten Aufnahmeboden 4₂. Im ersten Pinbereich 3, befindet sich ein erster Koppelpin 5₁, und im zweiten Pinbereich 3₂ befindet sich ein zweiter Koppelpin 5₂. Der erste und der zweite Koppelpin 5₁, 5₂ erstrecken sich vom jeweiligen Aufnahmeboden 4₁, 4₂ aus über die Anlagefläche 2 hinaus vorstehend und sind zum drehkoppelnden Zusammenwirken mit dem Schneidmesser 12 eingerichtet. Das Anordnen mehrerer Koppelpins 5 trägt zu einer besonders stabilen Ankopplung des Schneidmessers 12 an den Messerhalter 11 bei, insbesondere im Hinblick auf die gewünschte drehfeste Kopplung des Schneidmessers 12 mit dem Messerhalter 11, und ermöglicht ein leichtes Vermeiden von Unwuchten.

In nicht gezeigten Ausführungen sind mehr als zwei Pinbereiche 3, d.h. drei oder vier oder mehr Pinbereiche 3, und zugehörige Koppelpins vorgesehen, wenn dies für entsprechende Anwendungen Vorteile bietet.

In vorteilhaften Realisierungen liegen sich, wie im gezeigten Beispiel, der erste und der zweite Pinbereich 3₁, 3₂ bezüglich der Drehachse D diametral gegenüber. Dies ist im Hinblick auf eine günstige Kräfteverteilung und eine Minimierung von Unwuchten in der Regel von Vorteil. Alternativ können die beiden Pinbereiche 3₁, 3₂ auch nicht diametral gegenüberliegend angeordnet sein, d.h. gegeneinander um einen Winkel ungleich 180° bezüglich der Drehachse D zueinander versetzt.

In entsprechenden Ausführungen ist der Koppelpin 5, wie im gezeigten Beispiel, zum formschlüssigen Durchführen durch eine Pindurchführungsöffnung 9 des Schneidmessers 12 hindurch eingerichtet. Damit wird eine funktionell günstige und herstellungstechnisch sowie montagetechnisch einfache, formschlüssige Drehkopplung des Schneidmessers 12 am Messerhalter 11 ermöglicht. In alternativen Ausführungen kann die vom Koppelpin 5 vermittelte Drehkopplung des Schneidmessers 12 mit dem Messerhalter 11 in anderer Weise realisiert sein, beispielsweise durch Einfügen des Koppelpins 5 in eine zugehörige Schlitzöffnung des Schneidmessers 12 und geeignetes Festlegen des Koppelpins 5 in der Schlitzöffnung.

In entsprechenden Ausführungen weist der Koppelpin 5, wie im gezeigten Beispiel, an einem Kopfende eine Einführschräge 10 auf, wie dies in den Fig. 2 bis 8 für den jeweiligen Koppelpin 5, d.h. den ersten Koppelpin 5₁ und den zweiten Koppelpin 5₂, zu erkennen ist. Dies erleichtert ein passgenaues Aufsetzen des Schneidmessers 12 auf die Anlagefläche 2 der Halterstirnseite 1 des Messerhalters 11. In alternativen Ausführungen wird auf eine solche Einführschräge verzichtet, wenn dies in entsprechenden Anwendungen keine Vorteile bietet bzw. nicht erforderlich ist.

In vorteilhaften Ausführungsformen erstreckt sich die Auswurfschrägfläche 7, wie im gezeigten Beispiel, zumindest teilweise, d.h. bereichsweise, mit einem Schrägwinkel α zur Anlagefläche 2, der im Bereich zwischen 10° und 80° liegt, insbesondere im Bereich zwischen 30° und 60° und in bevorzugten Fällen im Bereich zwischen ca. 35° und ca. 50°. Dabei braucht die Schrägung der Auswurfschrägfläche 7 nicht überall den gleichen Wert des Schrägwinkels α besitzen, vielmehr kann der Schrägwinkel α je nach Bedarf lokal an verschiedenen Bereichen der Auswurfschrägfläche 7 unterschiedlich sein.

In vorteilhaften Ausführungsformen erstreckt sich die Auswurfschrägfläche 7, wie im gezeigten Beispiel, radial nach außen um eine Zusatzweite WZ über den Koppelpin 5 hinaus, wie in Fig. 7 angegeben. Diese Zusatzweite WZ der Auswurfschrägfläche 7 kann ein zuverlässiges und verklemmungsfreies Auswerfen des Koppelpins 5 nach dessen Ablösen bzw. Abscheren im Fall der Schneidmesserblockade erleichtern. Da auf den abgescherten Koppelpin 5 eine Zentrifugalkraft radial nach außen wirkt, ist es günstig, wenn sich die Auswurfschrägfläche 7 wie erwähnt zusätzlich zur Komponente in der Tangentialrichtung T auch mit einer Richtungskomponente radial nach außen erstreckt.

In vorteilhaften Ausführungen ist eine radiale Weite WA der Auswurfschrägfläche 7 mindestens so groß wie eine radiale Weite WP des Koppelpins 5. Dies begünstigt ein sicheres Auswerfen des abgescherten Koppelpins 5 im Fall der Schneidmesserblockade. Der abgescherte Koppelpin 5 hat durch die so gewählte radiale Weite WA der Auswurfschrägfläche 7 genügend seitlichen Platz bzw. Spielraum, sich entlang der Schrägung der Auswurfschrägfläche 7 zu bewegen, wenn er abgeschert wurde, ohne seitlich gegen die Seitenwand des vertieften Aufnahmebodens 4 anzustoßen und dadurch zu verklemmen. Meist ist es, wie im gezeigten Beispiel, günstig, wenn die radiale Weite WA der Auswurfschrägfläche 7 etwas größer ist als die radiale Weite WP des Koppelpins 5, wie aus Fig. 7 ersichtlich.

In entsprechenden Realisierungen erstreckt sich die Auswurfschrägfläche 7, wie im gezeigten Beispiel, in Richtung radial nach innen mindestens bis zu einem radial inneren Ende 5i des Koppelpins 5, wie in Fig. 7 veranschaulicht. Dies verhindert zuverlässig, dass sich der abgescherte Koppelpin 5 an seiner radial inneren Seite mit der Seitenwand des vertieften Aufnahmebodens 4 bzw. zwischen dem Messerhalter 11 und dem Schneidmesser 12 verklemmt.

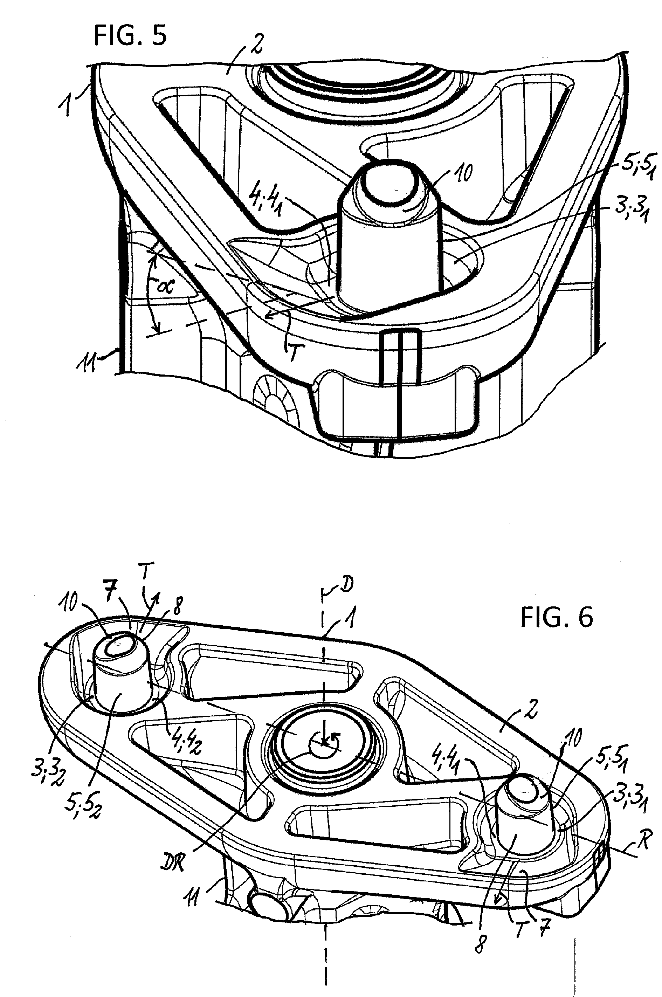

Durch die erfindungsgemäße Ausführung des Messerhalters und insbesondere von dessen Halterstirnseite 1 wird folglich jegliche Gefahr vermieden, dass sich bei einer Schneidmesserblockade der abgescherte Koppelpin 5 zwischen den angrenzenden Bereichen des Messerhalters 11 und des Schneidmessers 12 verklemmt. Fig. 8 veranschaulicht in Verbindung mit Fig. 6 nochmals diesen erfindungsgemäßen Effekt des sicheren Auswerfens des abgescherten Koppelpins 5 ohne Verklemmungsgefahr für den dort vorderen, geschnitten gezeigten Koppelpin 5 bzw. 5₁. Ausgehend vom Anfangszustand der Fig. 4 illustriert Fig. 8 die Situation, dass eine Schneidmesserblockade vorliegt, bei der die Drehung des Schneidmessers 12 abrupt stoppt, sich jedoch der Messerhalter 11 noch in der Drehrichtung DR weiterzudrehen versucht.

Dadurch kommt es zum Abscheren des Koppelpins 5, 5₁ in seinem Fußbereich zwischen dem vertieften Aufnahmeboden 4, 4₁ des Messerhalters 11 und dem Schneidmesser 12 im Bereich der Pindurchführungsöffnung 9, 9₁. Dementsprechend dreht sich der Messerhalter 11 noch etwas relativ zum Schneidmesser 12 weiter, wobei die Koppelpins 5₁, 5₂ nach ihrem Abscheren in der jeweiligen Pindurchführungsöffnung 9₁, 9₂ verbleiben und an der jeweiligen Auswurfschrägfläche 7 entlanggleiten. Durch das Entlanggleiten an der Auswurfschrägfläche 7 wird der jeweilige Koppelpin 5 axial in Richtung aus dem vertieften Aufnahmeboden 4 heraus nach außen gedrückt und kann dadurch ohne Verklemmungsgefahr über die Pindurchführungsöffnung 9 des Schneidmessers 12 herausgedrückt bzw. herausgeschoben werden.

Fig. 8 zeigt speziell die Situation, bei der sich der vertiefte Aufnahmeboden 4 bereits um eine gewisse Weiterdrehlänge 13 relativ zum Schneidmesser 12 und zum abgescherten Koppelpin 5 weitergedreht hat und sich der Koppelpin 5 um eine entsprechende Weglänge entlang der Auswurfschrägfläche 7 bewegt hat. Da sich die Anlaufschrägfläche 7 mit ihrer Schrägung bis zur Anlagefläche 2, d.h. bis auf deren Höhe, erstreckt, wird der Koppelpin 5 durch die Auswurfschrägfläche 7 vollständig aus dem vertieften Pinbereich 3 bzw. Aufnahmeboden 4 axial bis zum Niveau der Pindurchführungsöffnung 9 des Schneidmessers 12 herausbewegt, so dass er dann nach außen gelangen bzw. herausfallen kann, ohne zu verklemmen.

Wie die gezeigten und die weiteren oben erläuterten Ausführungsbeispiele deutlich machen, stellt die Erfindung einen Messerhalter zur Verfügung, mit dem ein Schneidmesser eines Rasenmähers in sehr vorteilhafter Weise unter Verwendung eines oder mehrerer Koppelpins derart gehalten werden kann, dass der oder die Koppelpins im Fall einer Schneidmesserblockade im Rasenmäherbetrieb zuverlässig ausgeworfen werden können, ohne mit dem Messerhalter und/oder dem Schneidmesser zu verklemmen, wenn der betreffende Koppelpin aufgrund der Schneidmesserblockade durch das trägheitsbedingte Weiterdrehen des Messerhalters 11 abgeschert, d.h. vom Messerhalter abgelöst, wurde. Dazu trägt maßgeblich die Auswurfschrägfläche bei, die eine schräge Kontaktfläche für den Koppelpin bereitstellt, entlang welcher der abgescherte Koppelpin entlanggleiten und dadurch in axialer Richtung aus dem Messerhalterbereich und dem Schneidmesser herausgelangen kann. Es versteht sich, dass der Messerhalter in gleicher Weise für handgeführte Rasenmäher wie auch für Roboter-Rasenmäher verwendbar ist.

## Patentansprüche

1. Messerhalter zum Halten eines im Betrieb mit dem Messerhalter um eine Drehachse (D) rotierenden Schneidmessers eines Rasenmähers, umfassend
- eine Halterstirnseite (1), die eine Anlagefläche (2) zum Anlegen des Schneidmessers, einen gegenüber der Drehachse (D) versetzten Pinbereich (3) mit einem gegenüber der Anlagefläche (2) vertieften Aufnahmeboden (4) und einen Koppelpin (5) im Pinbereich (3) aufweist, wobei sich der Koppelpin (5) vom Aufnahmeboden (4) aus über die Anlagefläche (2) hinaus vorstehend erstreckt und zum drehkoppelnden Zusammenwirken mit dem Schneidmesser eingerichtet ist, und
- eine Befestigungseinrichtung (6) zum drehgekoppelten Befestigen des Schneidmessers in seiner Anlage gegen die Anlagefläche (2),
**dadurch gekennzeichnet, dass**
- die Halterstirnseite (1) eine Auswurfschrägfläche (7) aufweist, die sich zumindest auf einer drehrichtungsabgewandten Seite (8) des Koppelpins (5) schräg vom Aufnahmeboden (4) zur Anlagefläche (2) erstreckt.

2. Messerhalter nach Anspruch 1, weiter **dadurch gekennzeichnet, dass** der Pinbereich (3) einen ersten Pinbereich (3₁) mit einem gegenüber der Anlagefläche (2) vertieften ersten Aufnahmeboden (4₁) und einen zweiten Pinbereich (3₂) mit einem gegenüber der Anlagefläche (2) vertieften zweiten Aufnahmeboden (4₂) umfasst und die Halterstirnseite (1) einen ersten Koppelpin (5₁) im ersten Pinbereich (3₁) und einen zweiten Koppelpin (6₂) im zweiten Pinbereich (3₂) aufweist, wobei sich der erste und der zweite Koppelpin (5₁, 6₂) vom jeweiligen Aufnahmeboden (4₁, 4₂) aus über die Anlagefläche (2) hinaus vorstehend erstrecken und zum drehkoppelnden Zusammenwirken mit dem Schneidmesser eingerichtet sind.

3. Messerhalter nach Anspruch 2, weiter **dadurch gekennzeichnet, dass** sich der erste und der zweite Pinbereich (3₁, 3₂) einander bezüglich der Drehachse (D) diametral gegenüberliegen.

4. Messerhalter nach einem der Ansprüche 1 bis 3, weiter **dadurch gekennzeichnet, dass** der Koppelpin (5) zum formschlüssigen Durchführen durch eine Pindurchführungsöffnung (9) des Schneidmessers hindurch eingerichtet ist.

5. Messerhalter nach Anspruch 4, weiter **dadurch gekennzeichnet, dass** der Koppelpin (5) an einem Kopfende eine Einführschräge (10) aufweist.

6. Messerhalter nach einem der Ansprüche 1 bis 5, weiter **dadurch gekennzeichnet, dass** sich die Auswurfschrägfläche (7) zumindest teilweise mit einem Schrägwinkel (α) zur Anlagefläche (2) erstreckt, der im Bereich zwischen 10° und 80° liegt.

7. Messerhalter nach einem der Ansprüche 1 bis 6, weiter **dadurch gekennzeichnet, dass** eine radiale Weite (WA) der Auswurfschrägfläche (7) mindestens so groß ist wie eine radiale Weite (WP) des Koppelpins (5).

8. Messerhalter nach einem der Ansprüche 1 bis 7, weiter **dadurch gekennzeichnet, dass** sich die Auswurfschrägfläche (7) radial nach außen um eine Zusatzweite (Wz) über den Koppelpin (5) hinaus erstreckt.

9. Messerhalter nach einem der Ansprüche 1 bis 8, weiter **dadurch gekennzeichnet, dass** sich die Auswurfschrägfläche (7) radial nach innen mindestens bis zu einem radial inneren Ende (5i) des Koppelpins (5) erstreckt.

10. Rasenmäher mit
- einem Messerhalter (11) nach einem der Ansprüche 1 bis 9 und
- einem am Messerhalter (11) drehgekoppelt befestigbaren Schneidmesser (12).
